# EUROPEAN PATENT SPECIFICATION

(11) **EP 0 672 322 B1**
(45) Date of publication and mention of the grant of the patent: **04.07.2001**
(21) Application number: 93923703.8
(22) Date of filing: 15.10.1993
(51) Int. Cl.: H04L 7/027

(54) **AN APPARATUS FOR TRANSFERRING INFORMATION FROM A FIRST TO A SECOND ELECTRONIC UNIT**
VORRICHTUNG ZUR INFORMATIONSÜBERTRAGUNG VON EINER ERSTEN ELEKTRONISCHEN EINHEIT ZU EINER ZWEITEN
APPAREIL PERMETTANT DE TRANSFERER DES INFORMATIONS D'UNE PREMIERE A UNE SECONDE UNITE ELECTRONIQUE

(30) Priority: 16.10.1992 SE 9203047
(43) Date of publication of application: 20.09.1995
(73) Proprietor: SwitchCore AB, 223 63 Lund (SE)
(72) Inventor: SVENSSON, Christer, S-590 60 Ljungsbro (SE); YUAN, Jiren, S-582 48 Linköping (SE)
(74) Representative: Akerman, Marten Lennart
(86) International application number: SE9300847
(87) International publication number: WO9409578

(56) References cited:
- US-A- 4 244 051
- US-A- 4 271 526
- US-A- 4 419 757

## Description

### TECHNICAL AREA

The invention refers to an arrangement for transmission of information from a first electronic unit to a second electronic unit on a balanced two-wire link, mainly between chips, multi-chip-modules or other modules that together constitute an electronic system.

### BACKGROUND

Data rates and clock frequencies are continuously increasing in modern systems. An important consequence of this is that the signal delay between chips becomes comparable to or larger than the clock cycle. This calls for arrangements that utilize asynchronous communication which in principle can be carried out in two different ways. One way is to use so-called handshaking which leads to a quite low data rate since the handshaking signals have to be awaited between each bit of information.

The other way is to use a so-called selfclocked signal which contains both data and clock. The best known selfclocked protocol is the Manchester code which is used in, for example, magnetic recording, see for instance B. Sklar, "Digital communication", Prentice Hall, Englewood Cliffs, NJ 1988. The Manchester code can only use a data rate which is about half the bandwidth of the communication link where the communication link includes transmitter, interconnection line and receiver. The reason for this is that up to two edges per bit of information are needed in order to ensure the recovery of the clock for any data sequence. More sophisticated codes can be more efficient but need more complex encoding/decoding circuitry. Also, the Manchester code as well as other pulse code modulated (PCM) codes needs some kind of time reference or phase locked oscillator at the receiver end.

Another important consequence of the increased data rate is the large power consumption in the transmitters. A common way to circumvent this problem is to reduce the output voltage swing which leads to a reduced noise margin. This normally calls for a balanced two-wire connection, see C. Svensson and J. Yuan, "High-speed CMOS chip-to-chip communications circuit", Proceedings of 1991 International Symposium on Circuits and Systems, pp. 2228--2231.

### THE PURPOSE OF THE INVENTION

The purpose of the invention is to achieve an arrangement for transmission of information from a first to a second electronic unit on a balanced two-wire link which increases the transmission rate and decreases the noise margin and, also, solves the problem of synchronization without any demands on insertion of extra edges in the signal, insertion of a memory of more than one time slot at the receiver or insertion of any knowledge at the receiver about the transmission rate at the transmitter.

### SUMMARY

The basis of the invention is the understanding that the above mentioned objectives can be attained by efficiently utilize the two-wire link wherein this is not only used for data transmission but also for solving the problem of synchronization. This is ordinarily solved by using a 3-level asynchronous protocol.

Thus, the present invention provides an arrangement for transmission of information from a first electronic unit to a second electronic unit on a balanced two-wire link. According to the invention, the first electronic unit is arranged to transmit binary symbols and the second electronic unit is arranged to receive binary symbols, the symbols being represented by a voltage difference between the two wires, wherein the voltage difference can assume three different values and each change between said values means the transfer of a binary symbol, the value of which is distinctly determined by the change from one value to the other value.

When using such an arrangement one can, according to the invention, attain a fast and reliable data transmission which, when exploiting selfclocking, can utilize the full bandwidth of the two-wire link.

Other characteristics of the invention will be evident from the subsequent patent claims.

### BRIEF DESCRIPTION OF THE FIGURES

The invention will be further described as an example, with reference to the enclosed figures, in which:
Fig. 1 gives an overview of the arrangement according to the invention,
Fig. 2 gives an overview of a first electronic unit according to the invention,
Fig. 3 shows a state diagram for the different states possible in the arrangement,
Fig. 4 shows different voltage signals representing states in the arrangement according to the invention,
Fig. 5 shows the encoder in Fig. 2 in further detail,
Fig. 6 shows a driving stage of the unit in Fig. 2,
Fig. 7 shows a second electronic unit according to the invention,
Fig. 8 shows the signals of the second electronic unit in Fig. 7,
Fig. 9 shows a state diagram used when encoding the transmitted signal,
Fig. 10 shows an implementation of a clock extracting circuit, which is part of Fig. 7, in further detail,
Fig. 11 shows an additional state diagram used in signal extraction,
Fig. 12 shows an implementation of the decoder in Fig. 7 in further detail.

### IMPLEMENTATION EXAMPLES

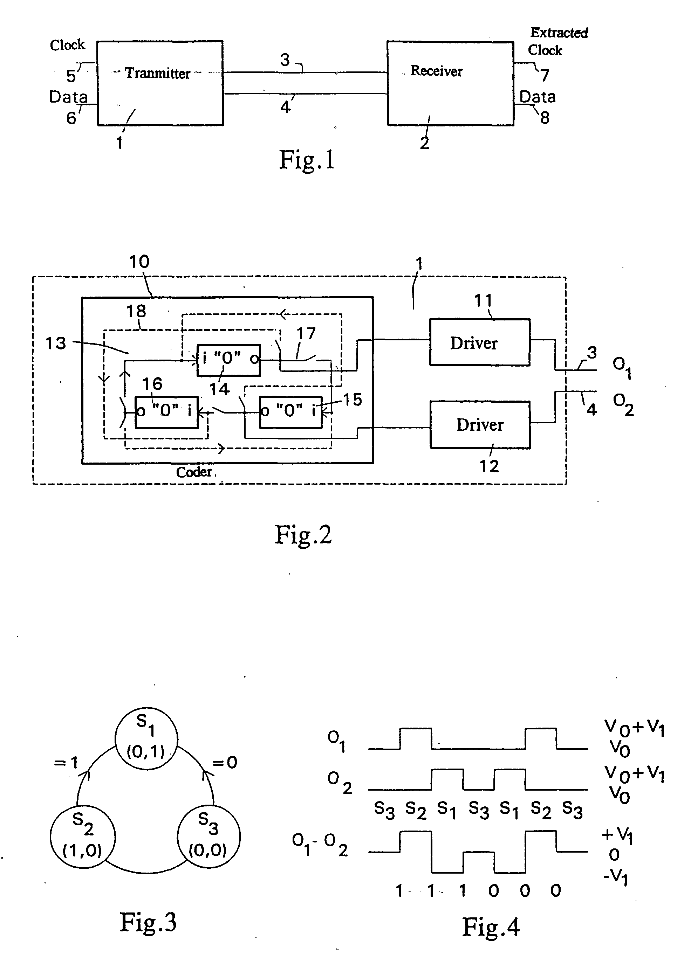

Fig. 1 shows the entire arrangement, according to the invention, comprising a first electronic unit 1, a transmitter, a second electronic unit 2, a receiver and an intermediate two-wire link 3, 4. The transmitter is supplied with a clock signal on wire 5 and a data signal on wire 6 and from the receiver an extracted clock signal on wire 7 and a decoded data signal on wire 8 are obtained.

In Fig. 2 the transmitter 1, which comprises an encoder 10 and two driving stages 11, 12, is shown. The encoder transforms the clock,signal and the data signal into a code that controls the driving stages. These output signals to the driving stages can, in this example, represent the values (0,1), (1,0) and (0,0) which correspond to the states S₁, S₂ and S₃, respectively see Fig. 3. The output signals from the driving stages to the two-wire link are denoted O₁ and O₂.

Each time a data bit is to be sent, e.g. at a positive clock edge, a change of state occurs. If a logical one is to be transmitted the state is moved one step clockwise in the state diagram in Fig. 3, i.e. from S; to Sᵢ₋₁, whereas a logical zero is transmitted by changing the state one step counter-clockwise, i.e. from Sᵢ to Sᵢ₊₁. Here i can assume the integers 1, 2 and 3 and is cyclic.

In Fig. 4 an example of the signals O₁ and O₂ on the twowire link, obtained from the driving stages 11, 12, and, also, the differential signal O₁-O₂ are shown. Here O₁ and O₂ can assume the voltage levels of V₀ and V₀+V₁ and, thus, the resulting differential signal can assume the values of +V₁, 0 and -V₁.

The data stream exemplified in Fig. 4, 111000, is represented by transitions between the states shown in Fig. 3. For example, the first data bit, a logical one, is represented by a transition from S₃ to S₂, whereas the second and third data bits, also logical ones, are represented by transitions from S₂ to S₁ and S₁ to S₃, respectively. Common to all these transitions is that they are executed in a clockwise manner in the state diagram, i.e. they represent logical ones. The succeeding three transitions are executed in an counter-clockwise manner as shown and, hence, represent logical zeros.

Fig. 2 shows a simple and efficient way of implementing the encoder 10 at which a bi-directional register ring 13 is used. The register ring 13 comprises three registers 14, 15, 16 of which each includes one information element and an input i and an output o. Each register output is connected to the inputs of the other two registers via connections which include switches. For instance, the output of register 14 is connected via connections 17, 18. These connections are arranged such that when the data signal represents a first value the output is connected to the first of the other two registers, in this case to register 15 via the full line connection 17, whereas if the data signal represents a second value the output is connected to the second of the other two registers, in this case to register 16 via the broken line connection 18. The outputs of the remaining registers are connected in a similar way.

In this fashion the content of the registers at every occasion of transmission is moved clockwise or counter-clockwise depending on the current data signal. The content of the registers 14, 15 is applied to the driving stages 11, 12, respectively, in order to create the states for (O₁, O₂), i.e. (0,1), (1,0) and (0,0). The edges of the output signals are synchronized by the register clock and delay-balanced drivers in the driving stages 11, 12 ensure a very small skew at the outputs of the driving stages.

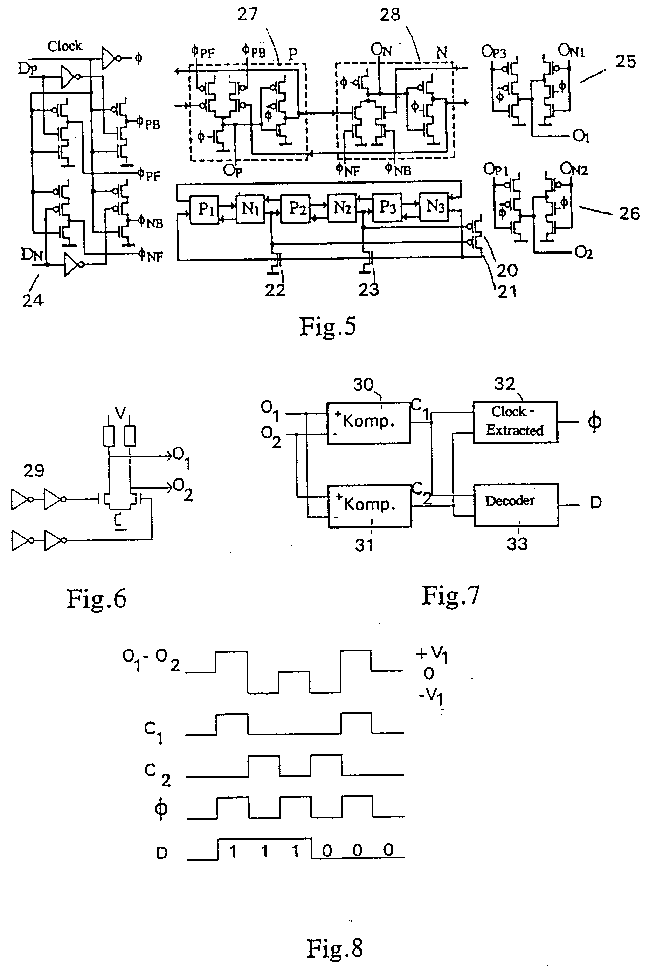

In Fig. 5 the encoder is shown in further detail. Here, the encoder is designed in so-called precharged logic which is described in e.g. Weste and Eshragian, "Principles of CMOS VLSI design", Addison-Wesley, 1985. In the figures the transistors with an inverting ring at the gate denote p-transistors and the ones without such a ring denote n-transistors. Every register is constituted by a p-block, in which p-transistors are in majority, and an n-block, in which n-transistors are in majority. The registers are connected to one another, as illustrated at the bottom of the figure, and have in this implementation both the function of logic and latch.

All p- and n-blocks are connected to preceding and succeeding n- and p-blocks, respectively, and are controlled by forward clock signals, Φ_{PF} and Φ_{NF}, and backward clock signals, Φ_{PB} and Φ_{NB}. In the upper middle part of the figure a register, comprising a p-block 27 and an n-block 28, is shown.

The clock signals supplied to the blocks are generated in a local clock generating circuit 24 from the global clock signal Φ and the input data, D_{P} and D_{N}. D_{P} and D_{N} are each other's inverses, i.e. when the data signal is high, D_{P} is high and D_{N} is low, and vice versa. From the circuit diagram it is evident that the forward clock is active when D_{P} is high and the backward clock is active when D_{N} is high. The clock signals are fed to the registers in order to transfer the register information forward or backward in the ring.

The output signals O₁ and O₂ are obtained from the signals O_{P3} and O_{N1} and, also, O_{P1} and O_{N2} from n-block 1, 2 and, also, p-block 3, 1, respectively. These signals are fed to two evaluation circuits 25, 26, one intended for O₁ and another for O₂, with a doubled data rate, i.e. half a clock cycle per data. From these evaluation circuits the resulting signals are fed to the driving stages.

With the support of external logic, in the figure this is represented by two p- and two n-transistors, 20, 21 and, also, 22, 23, respectively, the circuit can automatically initiate and keep a circulating pattern going, in this case the pattern is 0-0-1.

An implementation of the driving stages is shown in Fig. 6, an implementation that corresponds to the two driving stages 11, 12 in Fig. 2. At the input there are balanced pre-drivers 29. These are used since the output signals O₁ and O₂ have to change simultaneously. The output is made up of a conventional transistor-resistor circuit that is producing both output signals.

The driving stages can be implemeneted as any kind of binary driving stages that can assume two different voltage levels, V₀ and V₀+V₁. At high data rates it is preferred to match their output impedance to the characteristic impedance of the two-wire link connection.

The binary driving stages usually have a state that consumes less power than the other does and by using this state in both driving stages when the same voltage should be present on both connections the power consumption of the driving stages is reduced with about 1/3 due to the code with three levels.

The connection of the two-wire link consists of the two connections 3, 4, e.g. in the form of two printed wires in a multi-chip module or on a circuit board, in the form of two striplines on a circuit board or in the form of two coaxial cables. The two wires must be designed such that both wires essentially have the same length and the same properties in other respects. The signals that are transmitted should be truly balanced, i.e. the three states can only be distinguished by observing the voltage difference between the two wires, a difference that should be independent of noise voltages between the two-wire link and ground. By the change of states on the two-wire link the receiver can both detect that a data bit is sent and which value this data bit represents.

Fig. 7 shows the receiver including two comparators 30, 31, a clock extraction circuit 32 and, also, a decoder 33. The last two circuits are suitably designed as asynchronous finite state machines, AFSM. The comparators 30, 31 detect the difference between the voltages on the two wires 3, 4 in the two-wire link and produce as output voltage the signals C₁ and C₂, respectively. The comparators are designed such that the first has an offset voltage corresponding to a voltage difference that is larger than o V, for noise immunity reason preferably +V₁/2, and the second has an offset voltage corresponding to a voltage difference that is less than 0 V, preferably -V₁/2. In the presented implementation two comparators are cross connected to the two-wire link so that they detect both voltage differences, +V₁/2 and -V₁/2. An example of waveforms generated by this implementation is shown in Fig. 8 which corresponds to the example of Fig. 4 where waveforms generated by the transmitter 1 are shown. Here it can be seen that the output signal of the first comparator, C₁, goes high only when the voltage difference O₁-O₂ is high, i.e. above +V₁/2, while the output signal of the second comparator, C₂, goes high only when the voltage difference O₁-O₂ is low, i.e. below. -V₁/2. From the resulting data signal D it can be concluded that the transmitted binary information 111000 has been recovered. Note that the extracted information is available with two bits of information per clock cycle.

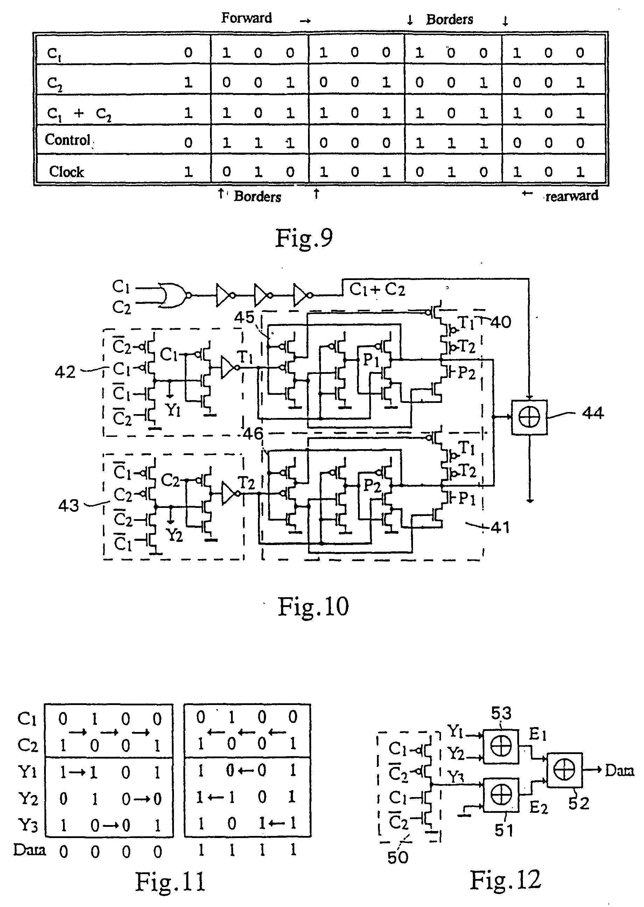

Fig. 9 shows a table for extracting the clock from a logical AND-operation on the signals C₁ and C₂ at which a control signal is generated and, at some transistions, inverted. From the table it is clear that C₁ can be used as a trigger signal for the control signal when the state transitions are executed forwardly, i.e. to the right in the table. In the same way C₂ can be used when the state transitions are executed backwardly, i.e. to the left in the table. When the transitions are executed back and forth in the zone between two borders positive edges will be produced on C₁ and C₂ and these positive edges have to be suppressed in order to have correct function.

The clock extracting circuit 32 in Fig. 7, whose inputs are connected to the outputs of the comparators, can be syntesized by using a systematic method, e.g. the one described in "Digital design fundamentals" by K. J. Breeding, Prentice Hall, Englewood Cliffs, NJ, 1989. In Fig. 10 such a synthesis of the clock extracting circuit is shown in further detail, a circuit that is fulfilling the requirements of detecting the borders at which the control signal is inverted. Two positive edge triggered flip-flops 40 and 41 are used to separately take care of the clockwise and counter-clockwise state transitions. The flip-flops are triggered by the signals T₁ and T₂ that are generated from C₁ and C₂ from the comparators, each by one of the trigger generators 42, 43. In the first generator the output signal T₁ is based on C₁ but the backward-going positive edges are suppressed by a signal Y₁ which is produced from a logical combination of C₁ and C₂ according to the table in Fig. 11. In the second generator the output signal T₂ is based on C₂ but the forward-going positive edges are suppressed by a signal Y₂ which is produced in a similar way to Y₁. The outputs of the two flip-flops are connected to each other so that when one output changes signal a change is forced onto the output of the other flip-flop as well. This is possible since only the triggered flip-flop can drive the output.

The output signal is fed to an exclusive OR-gate, XORgate 44, to control the sign of C₁+C₂. Thus, the clock is extracted at the output of the XOR-gate 44. A completely dynamic flip-flop can not be used in this position since states can change back and forth in the zone between two borders during a long time and the trigger signals T₁ and T₂ will be stable. For this reason the shown flip-flops are half-dynamic, see J. Yuan, "Efficient CMOS counter circuits", Electronic Letters, vol. 24, pp. 1311-1313, October 1988.

When both trigger signals, T₁ and T₂, are low the flip-flops become static since the five minimum-sized transistors at each output plus the bottom transistor in the output latch and the first stage in each flip-flop form a loop 45, 46 to lock the output. Both loops will be broken whenever one of the trigger signals goes high and the output will be refreshed.

After the clock is recovered the signal can be decoded. According to Fig. 7 this takes place in the decoder 33 which is shown in Fig. 12 in further detail. This decoder is connected to the outputs of the comparators 30, 31 as well as to an output of the clock extracting circuit 32. The data information has to be extracted according to the changes of codes which means that both the present and the previous information is needed. This extraction can e.g. be carried out using a hysteresis principle, which is also employed in the clock extracting circuit, with a state diagram according to Fig. 11. For the' 3-levels code used six different patterns are needed to describe both forward changes, in this case zeros, and backward changes in this case ones. Thus, there is a need for a third hysteresis signal Y₃ which is generated in a generator 50 similar to the trigger generators 42, 43 in Fig. 9.

In the table in Fig. 11 the memorized hysteresis states are indicated by bold figures. Since these states are always refreshed in Y₁, Y₂ and Y₃ by successive codes dynamic memory can be used. Three forward and three backward combinations of Y₁, Y₂ and Y₃ are completely different and can be used to determine three zeros and three ones. The extraction logic for the data signal is identical to the sum computation in an adder. Three XOR-gates 51, 52, 53 are used for this purpose. Hence, the total delay for the clock recovery and for the data extraction are approximately equal.

In an alternative implementation of the receiver the decoder is implemented as two parallel units where each is operating at half of the full data rate. The two decoder parts are implemented as synchronous finite state machines and can be implemented in conventional logic, e.g. the kind of logic described in Yuan and Svensson, Journal of Solid State Circuits, vol. 24, pp. 62-70, 1989.

An arrangement according to the above mentioned can prove useful in many circumstances, e.g. when transmitting data serially in local networks or when transmitting data in twisted wire pairs over fairly long distances when e.g. optical transmission is more expensive.

Nor must the invention be considered to be limited by the above description. For instance, a bi-directional communication could be arranged or a system could comprise more than one receiver at which the information is transmitted on a bus-like connection. Of course, also the relationship between direction of change and binary value in Fig. 3 can be re-arranged and the state of 0,0 can be replaced by 1,1 if desired.

As an alternative to representing the binary symbols with changes in one or another direction, see Fig. 3, a transition between a first state S₁ and a second state S₂ can imply a transmission of a first binary symbol, a transition between the first state S₁ and a third state S₃ can imply a transmission of a second binary symbol and a transition between the second state S2 and the third state S₃ can imply a transmission of the first or the second binary symbol depending on in which direction the transition is executed.

The shown implementations present a realization of the invention in n-MOS and p-MOS technique. Also other techniques can be used such as CMOS techniques and emitter-coupled logic, ECL, field-effect transistor logic in e.g. GaAs or other techniques that are useful to the realization of logic.

## Claims

1. An arrangement for transmission of information from a first electronic unit (1) to a second electronic unit (2) on a balanced two-wire link (3, 4), **characterised** in that the first electronic unit (1) is arranged to transmit binary symbols and the second electronic unit (2) is arranged to receive binary symbols, the symbols being represented by a voltage difference between the two wires (3, 4), wherein the voltage difference can assume three different values and each change between said values means the transfer of a binary symbol, the value of which is distinctly determined by the change from one value to the other value.

2. An arrangement according to claim 1, **characterized** in that the voltage of each wire (O1, 02) can assume two different voltage levels, V0 and V0+V1, respectively.

3. An arrangement according to claim 2, **characterized** in that each one of the three possible values of the voltage difference between the two wires (3, 4) each represents one of three different states (S1, S2, S3).

4. An arrangement according to claim 3, **characterized** in that the second electronic unit (2) comprises two comparators (30, 31) connected to the two-wire link (3, 4) and used for detecting the states, the first comparator (30) having an offset voltage corresponding to a voltage difference larger than 0 V, preferably V1/2, and the second comparator (31) having an offset voltage corresponding to a voltage difference less than 0 V, preferably -Vl/2.

5. An arrangement according to claim 3, **characterized** in that a transition from Si to Si-1 leads to a transmission of a binary symbol with a first value and a transition from Si to Si+1 leads to a transmission of a binary symbol with a second value, wherein i can assume the integers 1, 2 and 3 and is cyclic.

6. An arrangement according to any one of the preceding claims, **characterized** in that the first electronic unit (1) comprises an encoder (10), to which a clock signal (5) and a data signal (6) are fed, and two driving stages (11, 12) which are connected to the encoder (10) and whose respective output is connected to one of the wires in the two-wire link (3, 4).

7. An arrangement according to claim 6, **characterized** in that the encoder (10) comprises a bi-directional register ring (13).

8. An arrangement according to any one of claims 1-7, **characterized** in that the second electronic unit (2) comprises a clock extracting circuit (32) which extracts a clock signal from the changes in the voltage difference.

9. An arrangement according to any one of claims 3-8, **characterized** in that the second electronic unit (2) comprises a decoder (33) for the decoding of the information transmitted over the two-wire link (3, 4), which decoder is dependent on both current and previous state.

## Patentansprüche

1. Anordnung zur Informationsübertragung von einer ersten elektronischen Einheit (1) zu einer zweiten elektronischen Einheit (2) auf einer symmetrischen Doppelleitungsverbindung (3, 4), dadurch gekennzeichnet, dass die erste elektronische Einheit (1) derart angeordnet ist, um binäre Symbole zu übertragen, und die zweite elektronische Einheit (2) derart angeordnet ist, um binäre Symbole zu empfangen, wobei die Symbole durch eine Spannungsdifferenz zwischen den beiden Leitungen (3, 4) dargestellt sind, wobei die Spannungsdifferenz drei verschiedene Werte annehmen kann und jede Änderung zwischen diesen Werten die Übertragung eines binären Symbols bedeutet, wobei dessen Wert deutlich durch die Änderung von einem Wert in einen anderen Wert bestimmt wird.

2. Anordnung nach Anspruch 1,
dadurch gekennzeichnet, dass die Spannung jeder Leitung (O1, O2) jeweils zwei verschiedene Spannungspegel, V0 und V0+V1 annehmen kann.

3. Anordnung nach Anspruch 2,
dadurch gekennzeichnet, dass jeder einzelne der drei möglichen Werte der Spannungsdifferenz zwischen den beiden Leitungen (3, 4) einen von drei verschiedenen Zuständen (S1, S2, S3) darstellt.

4. Anordnung nach Anspruch 3,
dadurch gekennzeichnet, dass die zweite elektronische Einheit zwei mit der Doppelleitungsverbindung (3, 4) verbundene und zum Detektieren der Zustände verwendete Komparatoren (30, 31) aufweist, wobei der erste Komparator (30) eine Offset-Spannung hat, die einer Spannungsdifferenz größer als 0 V, vorzugsweise V1/2, entspricht und der zweite Komparator (31) eine Offset-Spannung hat, die einer Spannungsdifferenz niedriger als 0 V, vorzugsweise -V1/2, entspricht.

5. Anordnung nach Anspruch 3,
dadurch gekennzeichnet, dass ein Übergang von Si zu Si-1 zu einer Übertragung eines binären Symbols mit einem ersten Wert führt, und ein Übergang von Si zu Si+1 zu einer Übertragung eines binären Symbols mit einem zweiten Wert führt, wobei i die ganzzahligen Werte 1, 2 und 3 annehmen kann und zyklisch ist.

6. Anordnung nach einem der vorhergehenden Ansprüche,
dadurch gekennzeichnet, dass die erste elektronische Einheit (1) einen Coder (10), dem ein Taktsignal (5) und ein Datensignal (6) zugeführt werden, und zwei Treiberstufen aufweist, die mit dem Coder (10) verbunden sind und deren jeweiliger Ausgang mit einer der Leitungen der Doppelleitungsverbindung (3, 4) verbunden ist.

7. Anordnung nach Anspruch 6,
dadurch gekennzeichnet, dass der Coder (10) einen bidirektionalen Register-ring (13) aufweist.

8. Anordnung nach einem der Ansprüche 1 bis 7,
dadurch gekennzeichnet, dass die zweite elektronische Einheit (9) eine Taktextrahierungsschaltung (32) aufweist, die ein Taktsignal von den Änderungen in der Spannungsdifferenz extrahiert.

9. Anordnung nach einem der Ansprüche 3 bis 8,
dadurch gekennzeichnet, dass die zweite elektronische Einheit (2) einen Decoder (33) zum Decodieren der über die Doppelleitungsverbindung (3, 4) übertragenen Information aufweist, wobei der Decoder sowohl von dem momentanen als auch von dem vorhergehenden Zustand abhängig ist.

## Revendications

1. Appareil pour la transmission d'informations d'une première unité électronique (1) à une deuxième unité électronique (2) sur une liaison bifilaire équilibrée (3, 4), caractérisé en ce que la première unité électronique (1) est prévue pour émettre des symboles binaires et la deuxième unité électronique (2) est prévue pour recevoir des symboles binaires, les symboles étant représentés par une différence de tension entre les deux fils (3, 4), dans lequel la différence de tension peut prendre trois valeurs différentes et chaque changement entre les dites valeurs signifie le transfert d'un symbole binaire, dont la valeur est déterminée de façon distincte par le changement d'une valeur à l'autre valeur.

2. Appareil selon la revendication 1, caractérisé en ce que la tension de chaque fil (O1, 02) peut prendre deux niveaux de tension différents, V0 et V0+V1, respectivement.

3. Appareil selon la revendication 2, caractérisé en ce que chacune des trois valeurs possibles de la différence de tension entre les deux fils (3, 4) représente un de trois états différents (S1, S2, S3).

4. Appareil selon la revendication 3, caractérisé en ce que la deuxième unité électronique (2) comprend deux comparateurs (30, 31) connectés à la liaison bifilaire (3, 4) et utilisés pour détecter les états, le premier comparateur (30) ayant une tension de décalage correspondant à une différence de tension supérieure à 0, et de préférence à V1/2, et le deuxième comparateur (31) ayant une tension de décalage correspondant à une différence de tension inférieure à 0 V, et de préférence à - V1/2.

5. Appareil selon la revendication 3, caractérisé en ce qu'une transition de Si à Si-1 conduit à une transmission d'un symbole binaire ayant une première valeur et une transition de Si à Si+1 conduit à une transmission d'un symbole binaire ayant une deuxième valeur, dans lequel i peut prendre les valeurs entières 1, 2 et 3 et est cyclique.

6. Appareil selon une quelconque des revendications précédentes, caractérisé en ce que la première unité électronique (1) comprend un codeur (10), auquel un signal d'horloge (5) et un signal de données (6) sont fournis, et deux étages d'excitation (11, 12) qui sont connectés au codeur (10) et dont la sortie respective est connectée à un des fils de la liaison bifilaire (3, 4).

7. Appareil selon la revendication 6, caractérisé en ce que le codeur (10) comprend un anneau de registres bidirectionnel (13).

8. Appareil selon une quelconque des revendications 1 à 7, caractérisé en ce que la deuxième unité électronique (2) comprend un circuit d'extraction d'horloge (32) qui extrait un signal d'horloge à partir des changements de la différence de tension.

9. Appareil selon une quelconque des revendications 3 à 8, caractérisé en ce que la deuxième unité électronique (2) comprend un décodeur (33) pour le décodage des informations transmises sur la liaison bifilaire (34), ce décodeur dépendant à la fois de l'état courant et de l'état précédent.
